# EUROPEAN PATENT APPLICATION

(11) **EP 1 703 748 A1**
(43) Date of publication of application: **20.09.2006**
(21) Application number: 05700404.6
(22) Date of filing: 10.01.2005
(51) Int. Cl.: H04Q 7/00

(54) **A PROCESSING METHOD FOR USER TO SEND THE LOCATION INFORMATION REQUEST**

(30) Priority: 08.01.2004 CN 200410000173
(71) Applicant: Huawei Technologies Co., Ltd., Longgang District, Shenzhen, Guangdong 518129 (CN)
(72) Inventor: DUAN, Xiaoqin Huawei Administration Building, Guangdong 518129 (CN)
(74) Representative: Mounteney, Simon James
(86) International application number: PCT/CN2005/000030
(87) International publication number: WO 2005/069647

(57) **Abstract**

The present invention discloses a method for processing a location service, the method comprises: a target UE sending an MO-LR location service invoke to an LCS system, carrying an LCS Client identity and a service identity; the LCS system receiving the MO-LR location service invoke, positioning the target UE, and sending the obtained location estimate of the target UE and the received service identity to the corresponding LCS Client; the LCS Client receiving the location estimate of the target UE and the service identity, and processing the location estimate of the target UE according to the service identity. This invention makes it possible for an LCS Client to properly determine the specific MO-LR location service requested by the target UE according to the service identity and the processing mode of the location information of the target UE. Thus, the proper processing of the target UE's location information is implemented, constraints of the location service are removed, and the location service's promotion is facilitated.

## Description

### Field of the Technology

The present invention relates to positioning techniques for network equipment, and more particularly, to a method for processing a Mobile Originated - Location Request (MO-LR) location service.

### Background of the Invention

The location service (LCS) of a mobile communication network is to obtain the location of a target user's equipment (UE) with location techniques, wherein the target UE refers to a user terminal which is to be positioned in a mobile communication network and the location may be geographical information expressed in latitude and longitude or location data with reference to local streets. The location obtained by a mobile communication network may be offered to the target UE for the target UE's self-locating, or to the communication network itself for area-specific charging or operational maintenance, or to other applying clients, for instance, agencies or individuals, requesting the location of the target UE for value-added services. Therefore, the location service has wide applications in such fields as emergency rescue, vehicle navigation and intelligent traffic systems, job dispatch and team management, mobile-yellow-page query, and enhancement of network performance. In the 3^{rd} Generation Partner Project (3GPP), specifications on LCS as well as the operational mode, structure, state description, and message flow for implementing the LCS have been described.

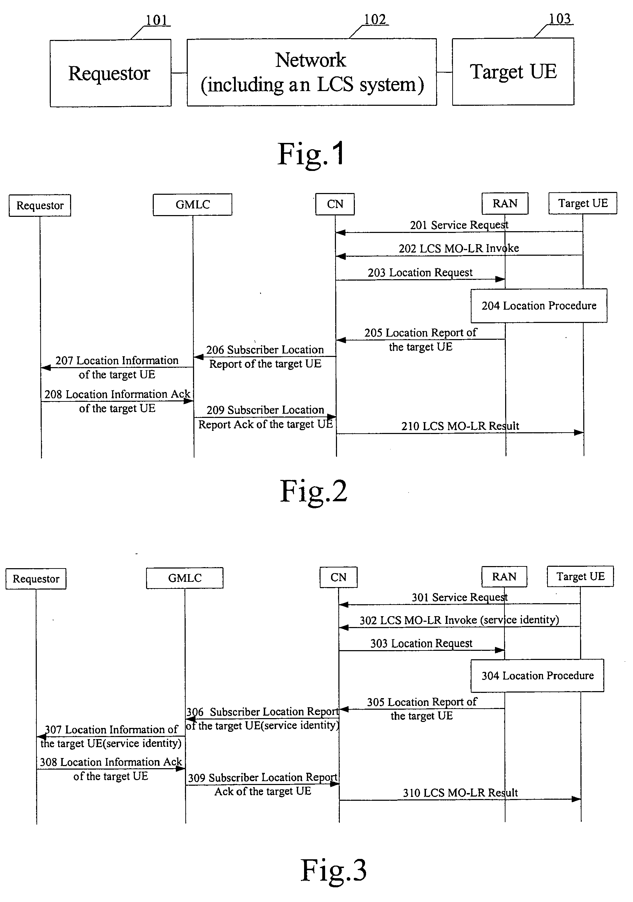

Figure 1 is a schematic diagram illustrating the logical structure for implementing the LCS. As shown in Figure 1, a requestor 101 requests the location of a target UE 103 from a network 102 containing an LCS system. The network 102 containing an LCS system makes a validity authentication of the requestor 101 to check whether the target UE 103 permits providing the location of the target UE 103 for the requestor 101. If the requestor 101 passes the validity authentication by the network 102 containing an LCS system, the network 102 containing an LCS system will accept the request for the location of the target UE 103 initiated by the requestor 101, locate the target UE 103, and provide the requestor 101 with the location estimate of the target UE 103. Otherwise, the network 102 containing an LCS system will reject the request for the location of the target UE 103 initiated by the requestor 101. For the purpose of description, the network containing an LCS system is hereinafter named an LCS system for short.

Logical Function Entities for implementing the location service in an LCS system include a Gateway Mobile Location Center (GMLC), a Subscriber Data Storage Server, such as a Home Location Register/Home Subscriber Server (HLR/HSS), a Core Network (CN), and a Radio Access Network (RAN). The GMLC may further include a Requesting GMLC (R-GMLC), a Home GMLC (H-GMLC), and a Visited GMLC (V-GMLC). The R-GMLC is the GMLC for receiving the request for location of the target UE initiated by a requestor, The H-GMLC is the GMLC which the target UE belongs to, and the V-GMLC is the GMLC that currently serves the target UE, that is, the GMLC which is associated with the serving node of the target UE currently. The R-GMLC, the H-GMLC, and the V-GMLC may be integrated in the same physical entity, or may be in separate physical entities.

So far, a procedure of a Mobile Originated Location Request (MO-LR) location service has been defined in the 3GPP specifications. An MO-LR location service invoke is a request that is initiated by a target UE to an LCS system for its own location information. After positioning the target UE, the LCS system will return a location estimate to the target UE. Furthermore, based on the requirement of the target UE, the LCS system may provide the location estimate of the target UE for an external LCS Client. The LCS Client herein refers to an LCS Client or any other applying client that is able to handle the location information of the target UE rather than a usual LCS Client that requests the location of the target UE.

Figure 2 is the flowchart for processing an MO-LR location service in the prior art. As shown in Figure 2, the processing of an MO-LR location service comprises the following steps:
Step 201: A target UE sends a Service Request to the CN via RAN, requesting to establish a radio signaling connection with an LCS system. Then the LCS system may initiate a process of authentication and ciphering for the target UE. If the target UE passes the authentication by the network containing the LCS system, proceed to Step 202; otherwise, reject the Service Request from the target UE for establishing a radio signaling connection and terminate the current procedure of the MO-LR location service.
Steps 202 ~ 204: The target UE sends an LCS MO-LR Invoke, i.e., an MO-LR location service invoke, to the CN via RAN, requesting the CN to position the target UE and return the location estimate to the target UE. The LCS MO-LR Invoke may further carry the information of an external LCS Client, requesting the LCS system to provide the acquired location information of the target UE for the LCS Client. After receiving the LCS MO-LR Invoke, the CN may decide whether the target UE has subscribed to the initiated MO-LR location service according to the information it saved, if the target UE has not subscribed to the MO-LR location service, the CN will return the target UE an MO-LR acknowledgement carrying the cause of error and reject the MO-LR request initiated by the target UE. If the target UE has subscribed to the MO-LR location service, the CN will send the RAN a location request for the target UE carrying the identity of the UE. After receiving the location request for the target UE, the RAN positions the target UE. For brevity, MO-LR location service invoke may be called as MO-LR invoke.
Step 205: After positioning the target UE, the RAN returns a Location Report of the target UE to the CN. If the RAN succeeds in positioning the target UE, i.e., it is able to acquire the location information of the target UE, the Location Report of target UE will carry the location information of the target UE, and if the target UE requests the LCS system to provide an appropriate LCS Client with the acquired location information of the target UE, proceed to Steps 206 - 210 after the CN receives the Location Report of the target UE. Otherwise, the CN will just return the target UE an MO-LR acknowledgement via RAN which includes the location information. If the RAN fails to acquire the location information of the target UE, the Location Report of the target UE will carry a value of error cause, and the CN will return an MO-LR acknowledgement carrying the value of error cause to the target UE via RAN.
Steps 206 ~ 207: the CN sends the designated GMLC a Subscriber Location Report of the target UE, and the Subscriber Location Report carries the LCS Client identity and location information of the target UE. After receiving the Subscriber Location Report of the target UE, the GMLC sends a Location Information of the target UE to the appropriate LCS Client which carries the location information of the target UE according to the LCS Client identity.
Steps 208 ~ 209: After receiving the Location Information of target UE, the LCS Client decides whether it is able to process the location information of the target UE, if yes, return the GMLC a Location Information Ack carrying a tag of success; otherwise, return a Location Information Ack to the GMLC which includes a value of error cause. After receiving the Location Information Ack, according to contents carried in the Location Information Ack, the GMLC returns the CN a Subscriber Location Report Ack which carries the corresponding contents, i.e., if the Location Information Ack the GMLC receives carries a tag of success, the Subscriber Location Report the GMLC returns to the CN will include a tag of success; and if the Location Information Ack received by the GMLC includes a value of error cause, then the Subscriber Location Report Ack returned to the CN will carry the value of error cause.
Step 210: After receiving the Subscriber Location Report Ack, the CN returns the target UE an LCS MO-LR Result carrying contents corresponding with the contents contained in the Subscriber Location Report Ack, i.e., if the CN receives a Subscriber Location Report Ack carrying a tag of success, it will return the target UE an LCS MO-LR Result including the location information; and if the CN receives a Subscriber Location Report Ack carrying a value of error cause, it will return an LCS MO-LRResult carrying the location information to the target UE, and return the target UE the value of error cause to notify the target UE that the location information has been provided for the appropriate LCS Client, but the LCS Client can not process the location information properly.

As seen from the above MO-LR Location Service procedure defined by the 3GPP specifications, when a target UE requests an LCS system for its own location information and to provide the target UE's location information for an external LCS Client, the LCS system may provide the location information of the target UE for the LCS Client after positioning the target UE. In practical applications, upon receiving the location information of the target UE, it is neccesary for the LCS Client to make some processing of the location information of the target UE. For example, the LCS Client converts the current form of the target UE's location information into a relatively vivid form, such as a form of map or text, and then, the LCS Client provides the converted information for the target UE.

In accordance with the MO-LR location service procedure defined by the existing 3GPP specifications, the LCS system provides the LCS Client with only the location information of the target UE and without any corresponding indication, which is to indicate the LCS Client how to process the location information of the target UE. Thus, if an LCS Client is able to process the location information of the target UE in various ways and but only the location information of the target UE is received, the LCS Client will not be able to determine the proper way of processing the target UE's location information, especially when the target UE has subscribed to manifold MO-LR services the LCS Client provides. For example, in a case that the target UE has subscribed to an electronic map service and a service of Friend Search, after the LCS Client receives only the location information of the target LTE, it can not make any decision about whether it should provide the service of electronic map or the Friend Search service, that is whether to convert the location information of the target UE into a format of electronic map which is sent to the target UE by means of Multimedia Message Service (MMS), or to search the closest good friends to the target UE based on the location information thereof and then send the target UE the corresponding list of good friends and the location information thereof. As seen from the above, there is uncertainty in using an MO-LR location service the target UE requests so that the promotion of the location service has been greatly constrained.

### Summary of the Invention

In view of the above, the object of this invention is to provide a method for processing a location service so as to remove the constraint on the LCS and benefit the promotion and application thereof.

To attain the above object, this invention provides a method for processing a location service, which comprises the steps of:
a target UE sending an MO-LR location service invoke to an LCS system, carrying an LCS Client identity and a service identity; the LCS system receiving the MO-LR location service invoke, positioning the target UE, and sending the obtained location estimate of the target UE and the received service identity to the corresponding LCS Client; the LCS Client receiving the location estimate of the target UE and the service identity, and processing the location estimate of the target UE according to the service identity.

In the above solution, the method may further comprise: the LCS Client sending the processed location estimate of the target UE to the target UE via the LCS system.

In the above solution, the method may further comprise: the LCS Client sending the processed location estimate of the target UE to the target UE by means of Short Message Service (SMS) or Multimedia Message Service (MMS).

In the above solution, the method may further comprise:
D1. the LCS Client determining whether the location estimate of the target UE could be processed successfully based on the service identity, if yes, performing Step D2; otherwise, performing Step D3;
D2. the LCS Client returning to the LCS system a location estimate response including a tag of success, and terminating the current process of the method;
D3. the LCS Client returning a location estimate response carrying a value of error cause to the LCS system.

After the Step D2, the method may further comprise: the LCS system receiving the location estimate response including a tag of success, and notifying the target UE that the LCS Client has successfully processed the location estimate.

After the Step D3, the method may further comprise: the LCS system receiving the location estimate response carrying a value of error cause, and notifying the target UE that the LCS Client has failed to process the location estimate.

Before the step of processing the location estimate of the target UE according to the service identity, the method may further comprise: according to the service identity, the LCS Client deciding whether the service corresponding to the service identity could be provided, if yes, it processing the location estimate of the target UE based on the service identity.

Before the step of processing the location estimate of the target UE according to the service identity, the method may further comprise: according to the service identity and the identity of the target UE, the LCS Client deciding whether the target UE corresponding to the identity of target UE has subscribed to the service, if yes, processing the location estimate of the target UE based on the service identity.

Before the step of processing the location estimate of the target UE according to the service identity, the method may further comprise: according to the service identity and the identity of the target UE the LCS Client deciding whether the target UE corresponding to the identity of target UE has subscribed to the said service, if yes, determining whether the balance of the account of the target UE is sufficient according to the target UE's identity; if the balance of the account of the target UE is sufficient, processing the location estimate of the target UE based on the service identity.

After the step of positioning the target UE, the method may further comprise: the LCS system sending the target UE the location estimate of the target UE.

In the above solution, the MO-LR location service invoke may be an LCS Circuit Switched - Mobile Originated - Location Request (CS-MO-LR) Invoke sent to a Mobile Switch Center (MSC)/MSC Server, or an LCS Packet Switched - Mobile Originated - Location Request (PS-MO-LR) Invoke sent to a Serving General Packet Radio Service Support Node (SGSN).

In accordance with the method disclosed in the invention, when a target UE requests an LCS system for the location information of itself and asks the LCS system to provide an external LCS Client with the location information of the target UE, the MO-LR invoke sent to the LCS system by the target UE carries a service identity; upon acquiring the location information of the target UE, the LCS system provides the target UE with the service identity while offering the LCS Client the location information of the target UE, so that the LCS Client is able to determine the specific MO-LR location service the target UE has requested properly and the method for processing the location information of the target UE. In this way, the LCS Client will have the ability to properly process the target UE's location information, the MO-LR service requested by the target UE will get its certainty, the constraint on the location service will be removed, and the promotion and application of the location service will be further benefited.

### Brief Description of the Drawings

Figure 1 is a schematic diagram illustrating the logical structure for implementing the location service;
Figure 2 is the flowchart for processing an MO-LR location service in the prior art;
Figure 3 is the flowchart for processing an MO-LR location service in accordance with the present invention;
Figure 4 is the flowchart of one embodiment in accordance with the present invention;
Figure 5 is the flowchart of another embodiment in accordance with the present invention.

### Detailed Description of the Embodiments

This invention is hereinafter described in detail with reference to the accompanying drawings.

In accordance with this invention, when a target UE requests an LCS system for the location information of the target UE and asks the LCS system to provide an external LCS Client with the location information of the target UE, the MO-LR the target UE has sent to the LCS system includes a service identity. And after acquiring the location information of the target UE, the LCS system provides the target UE with the service identity while providing the LCS Client with the location information of the target UE. So that, based on the service identity, the LCS Client is able to determine the specific MO-LR service the target UE is requesting, decide the mode of processing the target UE's location information, and further properly process the location information of the target UE.

Figure 3 is the flowchart for processing an MO-LR location service in accordance with the present invention. As shown in Figure 3, the processing of an MO-LR location service comprises the following steps:
Step 301: A target UE sends a Service Request to the CN via RAN, asking for the establishment of a connection of radio signaling with a network including an LCS system. At this moment, the network including the LCS system may initiate a process of authentication and ciphering for the target UE. If the target UE passes the authentication in the network which includes the LCS system, proceed to Step 302; otherwise, reject the Service Request initiated by the target UE for establishing a connection of radio signaling and terminate the current process of the MO-LR location service.
Steps 302 ~ 304: The target UE sends an LCS MO-LR Invoke to the CN via RAN, requesting the CN to position the target UE. The LCS MO-LR Invoke carries an LCS Client identity and a service identity, asking the LCS system to provide an external LCS Client with the location information of the target UE and requesting the external LCS Client to process the target UE's location information according to the service identity. After receiving the LCS MO-LR Invoke, the CN can decide whether the target UE has subscribed to the MO-LR location service initiated by the UE according to the information the CN saved If the target UE has not subscribed to the MO-LR location service, the CN will return the target UE an LCS MO-LR Result carrying a value of error cause, which means rejecting the MO-LR Invoke initiated by the target UE. If the target UE has subscribed to the MO-LR location service, the CN will send the RAN a Location Request of the target UE. Upon receiving the Location Request of the target UE, the RAN performs the locating procedure to position the target UE.
Step 305: After positioning the target UE, the RAN returns a Location Report of the target UE to the CN. If the RAN succeeds in positioning the target UE, i.e. it can acquire the location information of the target UE, the target UE's Location Report will carry the location information of the target UE; if the RAN fails to obtain the location information of the target UE, the Location Report of the target UE will carry a value of error cause. After the CN receives the Location Report of the target UE, if the Location Report of the target UE carries the location information of the target UE, perform Step 306; if the Location Report of the target UE carries a value of error cause, the CN will just return an LCS MO-LR Result to the target UE which carries the value of error cause, and terminate the current process of the MO-LR location service.
Steps 306 ~ 307: the CN sends a Subscriber Location Report of target UE to a GMLC, which carries the identity of the target UE, the location information of the target UE, the LCS Client identity and the service identity. After receiving the Subscriber Location Report of target UE, the GMLC sends a Location Information of the target UE to the LCS Client subsequently according to the LCS Client identity, and the Location Information includes the identity and location information of the target UE, and the service identity.
Step 308: Upon receiving the Location Information of the target UE, according to the service identity, the LCS Client may decide whether the service can be provided by the LCS Client itself, if yes, the LCS Client may further decide whether the target UE has subscribed to the service according to the identity of the target UE. If the decision is yes, it may further decide whether the balance of the target UE's account is sufficient for the current service. Based on the decisions made above, the LCS Client chooses whether to process the location estimate of the target UE, i.e. the location information of the target UE, based on the service requirement corresponding to the service identity. If the above decisions are yes, the LCS Client will process the location information of the target UE. That is, if the service could be provided by the LCS Client, the LCS Client will process the location information of the target UE; or if the service could be provided by the LCS Client while the target UE has subscribed to the service, the LCS Client will process the target UE's location information; or if the service could be provided by the LCS Client, the target UE has subscribed to the service, and the balance of the target UE's account is also sufficient, the LCS Client will process the target UE's location information. When completing processing the location information, the LCS Client may send the GMLC a Location Information Ack carrying a tag of success. Well, if the above decision is no, then the LCS Client will not process the location information but send a Location Information Ack carrying a value of error cause to the target UE.
Steps 309 ~ 310: After receiving the Location Information Ack, the GMLC will send the CN a Subscriber Location Report Ack including contents which is corresponding to the contents carried in the Subscriber Location Information Ack, i.e. if it receives a Location Information Ack carrying a tag of success, the GMLC will send the CN a Subscriber Location Report Ack carrying a tag of success; if it receives a Location Information Ack including a value of error cause, the GMLC will send a Subscriber Location Report Ack carrying the value of error cause to the CN. Upon receiving the Location Report Ack, the CN will return the target UE an LCS MO-LR Result carrying the corresponding contents according to the contents carried in the Location Report Ack, i.e. if it receives a Location Report Ack carrying a tag of success, the CN will return the target UE an LCS MO-LR Result including the location information which notifies the target UE that the location information has been provided for the appropriate LCS Client and the LCS Client has processed the location information of the target UE successfully; if it receives a Location Report Ack carrying a value of error cause, the CN will return the target UE an LCS MO-LR Result which carries the location information and the value of error cause, notifying the target UE that the location information has been provided for the appropriate LCS Client but the LCS Client can not process the location information of the target UE properly.

Through the above procedure, the result of processing the target UE's location information by the LCS Client can be provided for the target UE by a GMLC and the CN, i.e. the LCS Client sends the GMLC a Location Information Ack carrying the processing result of the target UE's location information, the GMLC subsequently sends a Subscriber Location Report Ack carrying the processing result of the location information of the target UE to the CN, and finally, the CN sends the target UE an LCS MO-LR Result which includes the processing result of the location information of the target UE. Here, the Location Information Ack carrying the processing result of the target UE's location information is a kind of location estimate response which is for indicating whether the LCS Client has processed the location information properly. The processing result may also be provided for the target UE by other means, e.g. the LCS Client may send the processed location information to the target UE via a Short Message Service Center (SMSC).

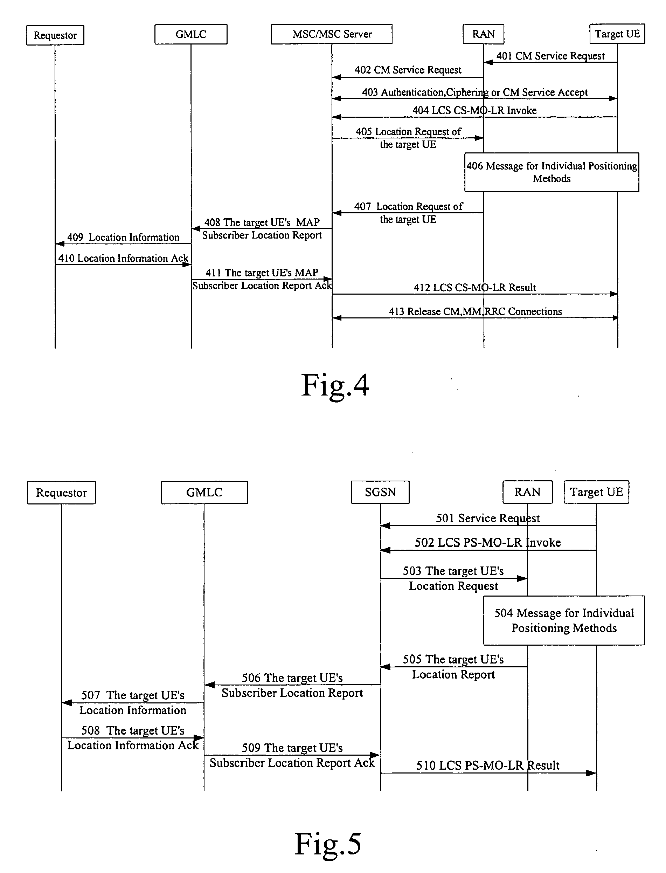

Figure 4 is the flowchart of one embodiment of the present invention. As shown in Figure 4, in this embodiment, the processing of an MO-LR invoke carrying the identity of an external LCS Client in CS domain comprises the following steps:
Steps 401 ~ 403: A target UE sends the RAN a Call Management Service Request (CM Service Request), requesting to set up a radio signaling connection with a network. After receiving the CM Service Request, the RAN forwards this CM Service Request to an MSC/MSC Server. Upon receiving the CM Service Request, the MSC/MSC Server may decide whether the target UE has subscribed to the MO-LR location service initiated by the target UE according to the saved information. If the target UE has not subscribed to the MO-LR location service, the MSC/MSC Server will return the target UE an LCS CS-MO-LR Result carrying a value of error cause, rejecting the MO-LR location service initiated by the target UE. If the target UE has subscribed to the MO-LR location service, the MSC/MSC Server will interact with the target UE to complete the authentication and ciphering of the target UE. If the target UE passes the authentication, the MSC/MSC Server will notify the target UE that the initiated CM Service Request is accepted and proceed to Step 404; otherwise, the MSC/MSC Server will inform the target UE that the initiated CM Service Request is rejected.
Steps 404 ~ 406: After passing the MSC/MSC Server's authenticating, the target UE sends an LCS CS-MO-LR Invoke which is a kind of MO-LR location service invoked in CS domain to the MSC/MSC Server, requesting the LCS system to position the target UE. The LCS CS-MO-LR Invoke carries an LCS Client identity and a service identity, asking the LCS system to provide an external LCS Client with the location information of the target UE, which makes the external LCS Client able to process the location information of the target UE according to the service identity. After receiving the LCS CS-MO-LR Invoke, the MSC/MSC Server sends the RAN a Location Request of the target UE. And then the RAN positions the target UE after it receives the Location Request.
Step 407: After positioning the target UE, the RAN returns a Location Report of the target UE to the MSC/MSC Server which carries the location estimate of the target UE. If the RAN succeeds in positioning the target UE, i.e. it can acquire the location information of the target UE, the Location Report will include the location information of the target UE; if the RAN fails to obtain the location information of the target UE, the Location Report will carry a value of error cause. At the time that the CN receives the Location Report, if the Location Report carries the location information of the target UE, perform Step 408; and if the Location Report carries a value of error cause, the CN will directly return the target UE an LCS CS-MO-LR Result including the value of error cause and terminate the current process of the MO-LR location service.
Steps 408 ~ 409: The MSC/MSC Server sends a Mobile Application Part (MAP) Subscriber Location Report to a GMLC. This MAP Subscriber Location Report carries the identity and location information of the target UE, the LCS Client identity, and the service identity. After receiving the MAP Subscriber Location Report, the GMLC will send a Location Information to the appropriate LCS Client according to the LCS Client identity, and the Location Information carries the identity and location information of the target UE, and the service identity.
Step 410: Upon receiving the Location Information, according to the service identity, the LCS Client may decide whether the service corresponding to the service identity can be provided by the LCS Client itself, if yes, the LCS Client may further decide whether the target UE has subscribed to the said service. If the decision is yes, it may further decide whether the balance of the target UE's account is sufficient for the current service. And based on the decisions made above, the LCS Client chooses whether to process the location estimate of the target UE, i.e. the location information of the target UE, based on the service requirement corresponding to the service identity. If the above decisions are yes, the LCS Client will process the location information of the target UE. That is, If the service could be provided by the LCS Client, the LCS Client will process the location information of the target UE; or if the service could be provided by the LCS Client and the target UE has subscribed to the service, the LCS Client will process the target UE's location information; or if the service could be provided by the LCS Client, the target UE has subscribed to the service, and the balance of the target UE's account is also sufficient, the LCS Client will process the target UE's location information. When completing processing the location information, the LCS Client may send the GMLC a Location Information Ack carrying a tag of success. If one of the above decisions is no, then the LCS Client will not process the location information but send a Location Information Ack carrying a value of error cause to the target UE.
Steps 411 ~ 412: After receiving the Location Information Ack, the GMLC will send an MAP Subscriber Location Report Ack to the MSC/MSC Server which carries the contents corresponding to the contents included in the Location Information Ack, i.e. if receiving a Location Information Ack carrying a tag of success, the GMLC will send the MSC/MSC Server an MAP Subscriber Location Report Ack including a tag of success; if receiving a Location Information Ack carrying a value of error cause, the GMLC will send the MSC/MSC Server an MAP Subscriber Location Report Ack which includes a value of error cause. Upon receiving the MAP Subscriber Location Report Ack, the MSC/MSC Server will send an LCS CS-MO-LR Result to the target UE which carries the contents corresponding to the contents in the MAP Subscriber Location Report Ack, i.e. if it receives an MAP Subscriber Location Report Ack carrying a tag of success, the MSC/MSC Server will send the target UE an LCS CS-MO-LR Result including a tag of success; and if receiving an MAP Subscriber Location Report Ack which carries a value of error cause, the MSC/MSC Server will send an LCS CS-MO-LR Result including a value of error cause to the target UE.
Step 413: The target UE releases the occupied resources of the LCS system, i.e., releases the Connection Management (CM), Mobility Management (MM), Radio Resource Connection (RRC) Connection with the LCS system, and terminates the current process of the MO-LR location service in CS domain.

Figure 5 is the flowchart of another embodiment of the present invention. As shown in Figure 5, in this embodiment, the processing of an MO-LR location service invoke carrying the identity of an external LCS Client in PS domain comprises the following steps:
Step 501: A target UE sends a Service Request to a SGSN, requesting to set up a radio signaling connection with a network. After receiving the Service Request, the SGSN sets up a signaling connection of PS domain with the target UE.
Steps 502 ~ 504: The target UE sends an LCS PS-MO-LR Invoke which is a kind of MO-LR location service invoked in PS domain to the SGSN, requesting the LCS system to position the target UE. This LCS PS-MO-LR Invoke carries an LCS Client identity and a service identity, asking the LCS system to provide an external LCS Client with the location information of the target UE so that the external LCS Client would be able to process the target UE's location information according to the service identity. Upon receiving the LCS PS-MO-LR Invoke, the SGSN sends the RAN a Location Request, and the RAN positions the target UE subsequently upon receiving the Location Request.
Step 505: After positioning the target UE, the RAN returns the SGSN a Location Report carrying the location estimate of the target UE. If the RAN succeeds in positioning the target UE, i.e. it can obtain the location information of the target UE, the Location Report will include the location information of the target UE; if the RAN fails to acquire the target UE's location information, the Location Report will carry a value of error cause. After the SGSN receives the Location Report, if the Location Report carries the location information of the target UE, perform Step 506; if the Location Report carries a value of error cause, the SGSN will directly return the target UE an LCS PS-MO-LR Result carrying the value of error cause and terminate the current process of the MO-LR location service.
Steps 506 ~ 507: The SGSN sends to the GMLC a Subscriber Location Report which carries the identity and location information of the target UE, the LCS Client identity and the service identity. After it receives the Subscriber Location Report, the GMLC sends the Location Information of the target UE to the appropriate LCS Client which includes the identity and location information of the target UE, and the service identity.
Step 508: After receiving the Location Information of the target UE, according to the service identity, the LCS Client may decide whether the service can be provided by the LCS Client itself, if yes, then the LCS Client may further decide whether the target UE has subscribed to this service. If the decision is yes, it may further decide whether the balance of the account of the target UE is sufficient for the service. Based on the decisions made above, the LCS Client chooses whether to process the location estimate of the target UE, i.e. the location information of the target UE, based on the service requirement corresponding to the service identity. If the above decisions are yes, the LCS Client will process the location information of the target UE. That is, If the service could be provided by the LCS Client, the LCS Client will process the location information of the target UE; or if the service could be provided by the LCS Client while the target UE has subscribed to the service, the LCS Client will process the target UE's location information; or if the service could be provided by the LCS Client, the target UE has subscribed to the service, and the balance of the target UE's account is also sufficient, the LCS Client will process the target UE's location information. When completing processing the location information, the LCS Client may send the GMLC a Location Information Ack carrying a tag of success. If one of the above decisions is no, then the LCS Client will not process the location information but send a Location Information Ack carrying a value of error cause to the target UE.
Steps 509 ~ 510: After receiving the Location Information Ack, the GMLC will send to the SGSN a Subscriber Location Report Ack which contains corresponding contents according to the contents included in the Location Information Ack" i.e. if receiving a Location Information Ack carrying a tag of success, the GMLC will send to the SGSN a Subscriber Location Report Ack containing a tag of success; if receiving a Location Information Ack including a value of error cause, the GMLC will send to the SGSN a Subscriber Location Report Ack which carries a value of error cause. After it receives the Subscriber Location Report Ack, the SGSN sends to the target UE an LCS PS-MO-LR Result carrying corresponding contents based on the contents contained in the Subscriber Location Report Ack" i.e. if receiving a Subscriber Location Report Ack carrying a tag of success, the SGSN will send to the target UE an LCS PS-MO-LR Result including a tag of success; if it receives a Subscriber Location Report Ack carrying a value of error cause, the SGSN will send to the target UE an LCS PS-MO-LR Result which contains a value of error cause.

To sum up, the foregoing mentioned are only preferred embodiments of this invention and not limiting the protection scope of this invention as detailed in the following claims.

## Claims

1. A method for processing a location service, the method comprising:
a target user's equipment (UE) sending a Mobile Originated - Location Request (MO-LR) location service invoke to a location service (LCS) system, carrying an LCS Client identity and a service identity;
the LCS system receiving the MO-LR location service invoke, positioning the target UE, and sending the obtained location estimate of the target UE and the received service identity to the corresponding LCS Client;
the LCS Client receiving the location estimate of the target UE and the service identity, and processing the location estimate of the target UE according to the service identity.

2. The method according to Claim 1, wherein the method further comprises: the LCS Client sending the processed location estimate of the target UE to the target UE via the LCS system.

3. The method according to Claim 1, wherein the method further comprises: the LCS Client sending the processed location estimate of the target UE to the target UE by means of Short Message Service (SMS) or Multimedia Message Service (MMS).

4. The method according to Claim 1, wherein the method further comprises:
D1. the LCS Client judging whether the location estimate of the target UE be processed successfully based on the service identity, if yes, performing Step D2; otherwise, performing Step D3;
D2. the LCS Client returning to the LCS system a location estimate response carrying a tag of success;
D3. the LCS Client returning a location estimate response carrying a value of error cause to the LCS system.

5. The method according to Claim 4, after the Step D2, the method further comprising: the LCS system receiving the location estimate response carrying a tag of success, and notifying the target UE that the LCS Client has successfully processed the location estimate.

6. The method according to Claim 4, after the Step D3, the method further comprising: the LCS system receiving the location estimate response carrying a value of error cause, and notifying the target UE that the LCS Client has failed to process the location estimate.

7. The method according to Claim 1, before the step of processing the location estimate of the target UE according to the service identity, the method further comprising: according to the service identity, the LCS Client judging whether the service corresponding to the service identity could be provided, if yes, it processing the location estimate of the target UE based on the service identity.

8. The method according to Claim 7, before the step of processing the location estimate of the target UE according to the service identity, the method further comprising: according to the service identity and the identity of the target UE, the LCS Client judging whether the target UE corresponding to the identity of target UE has subscribed to the service, if yes, processing the location estimate of the target UE based on the service identity.

9. The method according to Claim 7, before the step of processing the location estimate of the target UE according to the service identity, the method further comprising: according to the service identity and the identity of the target UE the LCS Client judging whether the target UE corresponding to the identity of target UE has subscribed to the said service, if yes, judging whether the balance of the account of the target UE is sufficient according to the target UE's identity; if the balance of the account of the target UE is sufficient, processing the location estimate of the target UE based on the service identity.

10. The method according to Claim 1, after the step of positioning the target UE, the method further comprising: the LCS system sending the target UE the location estimate of the target UE.
